# EUROPEAN PATENT SPECIFICATION

(11) **EP 3 630 549 B1**
(45) Date of publication and mention of the grant of the patent: **03.11.2021**
(21) Application number: 18726436.1
(22) Date of filing: 18.05.2018
(51) Int. Cl.: B60R 1/076

(54) **PIVOT DETENT SYSTEM AND REAR VIEW DEVICE THEREWITH**
DREHRASTSYSTEM UND RÜCKBLICKVORRICHTUNG DAMIT
SYSTÈME DE DÉTENTE DE PIVOT ET DISPOSITIF DE VISION ARRIÈRE ÉQUIPÉ DUDIT SYSTÈME

(30) Priority: 24.05.2017 DE 102017111461
(43) Date of publication of application: 08.04.2020
(73) Proprietor: SMR Patents S.à.r.l., 2453 Luxembourg (LU)
(72) Inventor: CALLUM, Scott-Collins, Portchester, Hampshire PO16 9SD (GB); LETTIS, Andrew, Chichester West Sussex PO19 8TA (GB)
(74) Representative: Weber-Bruls, Dorothée
(86) International application number: PCT/EP2018/063076
(87) International publication number: WO 2018/215336

(56) References cited:
- EP-A1- 3 141 429
- EP-A2- 0 807 551
- US-A- 5 005 797
- US-A1- 2008 062 545
- US-A1- 2014 146 407

## Description

The present invention refers to a pivot detent system adapted to a rear view device with a base to be fixed to a vehicle, a head rotatable relative to the base and said pivot detent system in line with the preamble of claim 1.

EP 0 711 682 A1 describes such a detent system. The known detent system acts between two components that rotate with respect to one another to control rotation from a first set position to at least a second set position that comprises at least one rotating cam positioned between adjacent surfaces of said two components and spaced from the axis of rotation of said two components, said cam being journalled for rotation on one of said components about an axis that is substantially transverse to the axis of rotation between said two components, the operating surface of said cam comprising at least one cam lobe that is caused to rotate as said two components rotate and acts to separate said components, and resilient means acting between said two components to urge said adjacent surfaces together and one of said adjacent surfaces against said cam so that a predetermined torque is required to cause relative rotation between said components, said predetermined torque being set by the force applied by said resilient means resulting from the extent of compression of said resilient means when said two components separate upon rotation. Upon relative rotation between the two components, the cam is caused to rotate and the upward path of a lobe causes the two components to be separated as the lobe is brought between the adjacent component and the axis of rotation of the cam.

US 2014/146407 A1 refers to an exterior rearview mirror assembly which is to be mounted to a vehicle and includes a pedestal, a mirror holder, a coupling member connected between the pedestal and the mirror holder, a sleeve mounted to the coupling member, an engagement member held between the coupling member and the pedestal, a first screwed fastener threaded with the pedestal, a limiting member mounted to the first screwed fastener, and a springy member held between the limiting member and the coupling member. The engagement member is engaged with the pedestal and the sleeve. When the engagement member is controlled to disengage selectively from the pedestal or the sleeve, an included angle between the coupling member and the pedestal can be adjusted.

EP 3 141 429 A1 provides a vehicular door mirror capable of configuring an engagement structure for holding a folded storage position of a door mirror unit without design problems. When a door mirror unit is rotated from a deployed use position to a folded storage position, a protrusion portion disposed on a groove upper surface of a rotation regulating groove of a bearing portion on the door mirror unit side slidably contacts and rides over, during the rotating process, a protrusion portion disposed on the upper edge of a rotation regulating piece of a shaft until the protrusion portions fall into a mutual engagement, whereby the folded storage position of the door mirror unit is held.

US 5 005 797 A refers to a folding door mirror for automobiles, in which a bearing member receiving a shaft of a mirror base to be fixed to an automobile body is molded integrally with a mirror housing of a synthetic resin. The bearing member is formed as a bearing cylinder on the inner side of the mirror housing, and the shaft is engaged with a receiving surface of the bearing cylinder and supports the mirror housing so that the mirror housing can be turned. U-shaped plate springs are provided between the inner surface of the bearing cylinder and the shaft, and one end portion of each of the plate springs is in contact with the inner surface of the bearing cylinder, the other end portion thereof contacting a flat surface formed on a part of the shaft. Owing to the frictional force occurring due to the resilient force of the springs, the turning of the mirror is prevented, so that the mirror housing can be held in a normal position. The shaft is provided at its free end portion with a stopper so that the mirror housing is not moved in the axial direction of the shaft. When a large external force is applied to the mirror housing, the contact portions of the plate springs and shaft are moved from the flat surface to the circumferential surface against the force of the springs, so that the mirror housing is turned slowly from the normal position to an inclined position.

EP 0 807 551 A2 teaches an exterior mirror for a motor vehicle which has a support platform projecting laterally from the vehicle body and a spigot upstanding on the support platform. A mirror subassembly pivotally is mounted on the spigot. A spring acts parallel to said axis to bias detent formations on the base and the mirror subassembly into engagement with one another. During assembly, the spigot and the spring are inserted into a sleeve so that the spring engages between a first projection on the exterior of the spigot and a second projection on the interior of the sleeve. Next, a first abutment on the spigot engages with a complementary abutment on the sleeve so as to retain the spring in a stressed state. Then a bayonet connection couples the spigot and the platform. Finally, the first abutment on the spigot is disengaged from the complementary abutment on the sleeve so that the spring retains the bayonet connection in an engaged condition.

US 2008/062545 A1 provides a sideview mirror which includes multiple parts, wherein the mirror body, the washer, the spring, the support member, the bearing, the rotation member, and the mounting member are combined to form a window corner type sideview mirror, while the mirror body, the washer, the spring, the support member, and the mounting member are combined to form a car side body type sideview mirror. Thus, the window corner type sideview mirror only needs to provide the fixing member additionally to replace the bearing, the rotation member, and the mounting member to form the car side body type sideview mirror, so that the sideview mirror is both available for a window corner type sideview mirror and a car side body type sideview mirror.

It is the object of the present invention to further develop the known pivot detent system to enable a continuous lift free rotation.

This object it achieved by the features of the characterizing portion of claim 1.

Preferred embodiments of the pivot detent system of the invention are described in claims 2 to 8.

The invention also provides a rear view device with a base to be fixed to a vehicle, a head rotatable relative to the base and a pivot detent system of the invention, wherein the first component is part of or fixedly connected to the head and the second component is part of or fixedly connected to base.

It is preferred that the first set position is defined by the driving position of the head, and a first second set position is defined by the parking position of the head, and/or a second second set position is defined by the knocked out position of the head.

The detent system of the present invention is in particular suited for an external rear view device having a head which can be moved relative to a fixed base, as for example described in EP 16198759.9. The moveable head can comprise one or more reflective elements and/or one or more cameras. When the head is disengaged from its normal position, which can be the driving position and is defined by detents of the pivot detent system, to change into a parking position or a knocked forward position, defined by further detents, the respective rotation is performed without any lift of the head. This is achieved due to the interposition of an independent detent ring which elevates by reacting against the force of a resilient means providing a pivot spring. In fact, the detents securing the driving position can be disengaged by applying a predetermined rotational force resulting in deflecting the pivot spring and thereby moving the detent ring. As the pivot spring deflects during rotation, the head is not lifted.

In addition, the invention is ideally suited to manufacturing many of the components from polymeric materials. As such, its manufacture is simple and inexpensive.

The invention may be best understood with reference to the following description of embodiments taken together with the accompanying schematic drawings:
Figure 1 is a section view of the detent system radial in the plane of the pivot axis;
Figure 2 is a section view of figure 1 parallel to the pivot axis along the line A- A; and
Figure 3 is a section view of figure 1 perpendicular to the pivot axis along the line B-B.

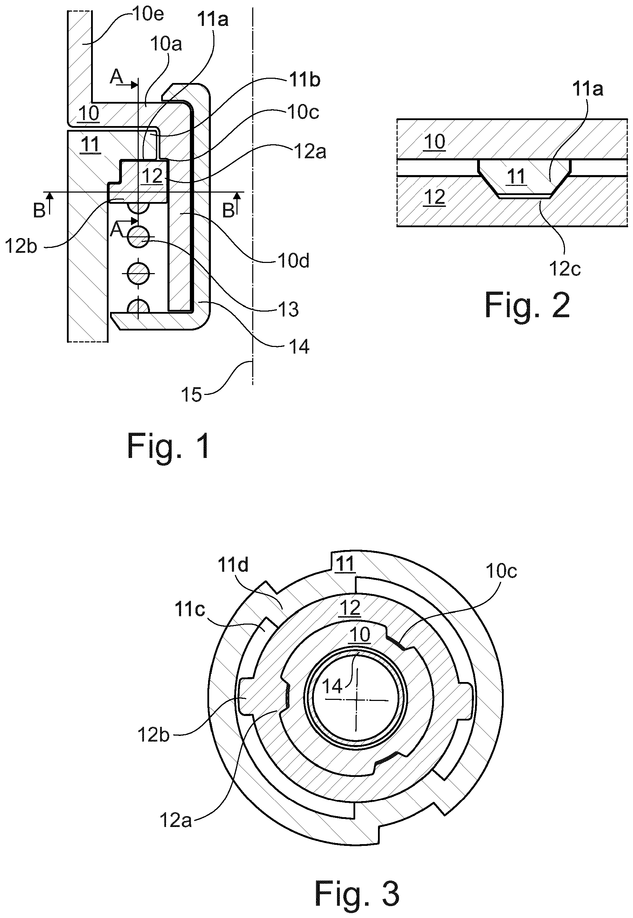

A pivot detent system of the invention, in particular for a not shown external rear view device, is shown in figures 1 to 3 and comprises a case frame 10, a base frame 11, a detent ring 12, a pivot spring 13 and a bayonet 14. The base frame 11 belongs to a base, which can be fixed to a vehicle, and is provided in form of a cylindrical section with a shoulder 1 lb. The case frame 10 belongs to a case or rather head, which can rotate around an axis 15 relative to the base and carries at least one reflective element and/or camera. Still further, the case frame 10 is provided in form of a cylindrical section with a step 10a such that there is a narrow lower segment 10d and a broader upper segment 10e. The base frame 11 is arranged concentrically around the case frame 10 below the step 10a and, thus, in the region of the narrow lower segment 10d with the upper side of the shoulder 1 lb abutting against the underside of the shoulder 1 lb as shown in figure 1. Above the shoulder 1 la the radial outer surfaces of the base part 10 and the frame part 11 are aligned to flush with each other.

The narrow segment 10d of the case frame 10 fits into the cylindrical opening of the base frame 11 such that the case frame 10 rests on the base frame 11. The detent ring 12 is located inside the base frame 11 around the narrow segment 10d of the case frame 10 between both frames 10, 11 and is hold by the spring 13, preferably being a coil spring. The spring 13 is supported by the bayonet 14 that encompasses the narrow part 10d of the case frame 10 from within the pivot detent system.

Thus a ring space is provided between the two frames 10, 11 below the shoulder 1 lb and above the lower end of the bayonet 14, with the detent ring 12 and the spring 13 being arranged within this space. The detent ring 12 is abutting against the underside of the shoulder 1 lb with the spring 13 forcing the detent ring 12 against the base part 11 in the region, which in turn urges the base part shoulder 1 lb against the frame part step 10a, as long as the spring 13 is supported by the bayonet 14. The bayonet 14 extends from the lower end of the spring 13 along the inner surface of the case frame 10 up to the step 10a such that it embraces the lower segment 10d of the case frame 10 and, thus, the cylindrical region housing the detent ring 12 and the spring 13. In fact, the bayonet 14 holds the pivot spring system together and allows an easy assembly as well as disassembly.

The detent ring 12 is provided with • at least one first detent 12a for engaging the case frame 10 and, thus, acting as a key and
- at least one second detent 12b which can move within a channel defined by the base
   frame 11 with the second detent 12b acting as a stop as explained with respect to figures 2 and 3 in the following.

Figure 2 shows a cross section taken along line A-A in figure 1 such that it depicts the interaction of the relevant parts of the pivot detent system of the invention in a vertical section running in parallel to the axis 15. Accordingly the shoulder 1 lb of the base frame 11 is provided with a third detent 11a resting within a recess 12c of the detent ring 12 in the normal position of the pivot detent system, which can be the driving position of the rear view device. The geometry of the recess 12c is complementary to the one of the third detent 11a, with the cross section of the third detent 1 la is in the form of a trapeze with smoothened edges.

Figure 3 shows a cross section taken along line B-B in figure 1 such that it shows the interaction of the relevant parts of the pivot detent system of the invention in a horizontal section running perpendicular to the axis 15. Accordingly, the bayonet 14 is arranged in the middle with the case frame 10 being arranged around the bayonet 14, the detent ring 12 being arranged around the case frame 10 and the base frame 11 being arranged around the detent ring 12. The detent ring 11 can rotate together with the case frame 12 and the bayonet 14 due to the engagement via three first detents 12a. The respective rotation is restricted by two fourth detents 1 Id of the base frame 11 defining two channels 11c within which the two second detents 12b of the detent ring 12 can move. The two ends of the channels 11c define two positions, one could be a parking position and the other could be a knocked out position with the driving position being shown in figure 3. The driving position is arranged between the parking position and the knocked out position.

The interaction of the parts of the pivot detent system of the invention when being forced out of its normal / driving position will be described in the following with reference to figures 1 to 3: In order to set the detent ring 12 into rotational motion around the pivot axis 15 and relative to the base frame 10, the engagement of the detent 1 la of the case frame 11 within the recess 12c of the detent ring 12 has to be overcome. This is achieved by pushing the detent ring 12 against the spring 13 such that a predetermined torque can be overcome to break out the case frame 11 and, thus, the head. This results in moving the detent 11a out of the recess 12c allowing the detent ring 12 to rotate together with the case frame 10 within the boundaries defined by the channels 11c. The detent 1 la is acting as a manual fold detent.

Due to the fact that the spring 13 deflects, neither the detent ring 12 nor the case frame 10 and, thus, the head are lifted or rather do have to be lifted for allowing a rotation.

The case frame 10 can take the detent ring 12 along during rotation as soon as the detent 11a has disengaged the recess 11c due to a vertical movement of the detent ring 12 that is performed against the force of the spring 13, as the first detents 12a of the detent ring 12 secure the attachment to the case frame 10. The second detents 12b of the detent ring 12 as well as the fourth detents 1 Id of the base frame 11 provide stops, respectively defining the parking and knocked out positions.

### Reference Signs

- 10: case frame
- 10a: step
- 10c: recess
- 10d: narrow segment
- 10e: broad segment
- 11: base frame
- 11a: third detent
- 11b: shoulder
- 11c: channel
- 11d: fourth detent
- 12: detent ring
- 12a: first detent
- 12b: second detent
- 12c: recess
- 13: coil spring
- 14: bayonet
- 15: pivot axis

## Claims

1. A pivot detent system adapted for an external rear view device of a vehicle with a base to be fixed to the vehicle and a head rotatable relative to the base, wherein
the pivot detent system acts between two components that rotate with respect to one another around an axis (15) to control rotation from a first set position to at least a second set position, with each of said two components comprising a cylindrical section (10, 11) and a resilient means being arranged within a cylindrical space between said cylindrical sections (10, 11) to act between said two components,
the first component is part of or fixedly connected to the head and the second component is part of or fixedly connected to base, and the pivot detent system comprises a case frame provided in form of a cylindrical section (10) and a base frame provided in form of a cylindrical section (11), and
the pivot detent system comprises a bayonet (14) that is locked to the case frame both along the z-axis which is parallel to the pivot axis (15) and rotationally about the pivot axis (15),
**characterized by**
at least one detent ring (12) being arranged within said cylindrical space between said cylindrical sections (10, 11), with the detent ring (12) being moveable together with the first component relative to the second component when overcoming a predetermined torque to break a detent engagement between the detent ring (12) and the second component by deflecting the resilient means, wherein the first component is provided with a step (10a) between a narrow segment (10d) of the cylindrical section (10) and a broad segment (10e) of the cylindrical section (10) against which a shoulder (11b) of the second component is forced by the resilient means acting on the detent ring (12), the detent ring (12) engages the first component via a first detent engagement, with the first detent engagement comprising at least one first detent (12a) of the detent ring (12) extending radial inwardly to engage a respective recess (10c) provided by the narrow segment (10d) of the cylindrical section (10) of the first component,
the detent ring (12) engages the second component via a second detent engagement in the at least one second set position, with the second detent engagement comprising at least one second detent (12b) of the detent ring (12) extending radial outwardly, and the second component provides at least one channel (11c) within which the second detent (12b) of the detent ring (12) can move.

2. The pivot detent system of claim 1, **characterized in that**
the narrow segment (10d) of the first component fits into a cylindrical opening of the second component,
the detent ring (12) is located inside the second component and around the narrow segment (10d) of the first component, and
the resilient means, preferably comprising a coil spring (13), is extending between the detent ring (12) and a supporting means.

3. The pivot detent system of claim 2, **characterized in that**
the bayonet (14) is locked to the case frame (10) both along the z-axis which is parallel to the pivot axis (15) using the compressional loading provided by the coil spring (13).

4. The pivot detent system of one of the preceding claims, **characterized in that**
the support means, in particular comprising the bayonet (14), is extending along the radial inward side of the narrow segment (10d), preferably embracing the cylindrical section (10) of the first component and/or abutting against the upper side of the step (10a) of the first component.

5. The pivot detent system of one of the preceding claims, **characterized in that**
the detent ring (12) engages the second component via a third detent engagement in the first set position, with the third detent engagement preferably comprising at least on third detent (11a) of the second component within a recess (12c) of the detent ring (12) extending parallel to the axis (15).

6. The pivot detent system of one of the preceding claims, **characterized in that**
each channel (11c) is defined between two fourths detents (11d) of the second component extending radial inwardly.

7. The pivot detent system of claim 5 or 6, **characterized in that**
the third detent (11a) is provided at the underside of the shoulder (11b) of the second component and can be moved out of the recess (12c) of the detent ring (12) by deflecting the spring (13) to allow for the detent ring (12) being rotated together with the first component within the angular section defined by the channel (11c) of the second, fixed component.

8. The pivot detent system of one of the preceding claims, **characterized in that**
the first, second, third and/or fourth detent(s) (12a, 12b, 11a, 11d) has (have) a substantially trapezoidal cross-section, preferably with smoothened edges.

9. A rear view device with a base to be fixed to a vehicle, a head rotatable relative to the base and a pivot detent system of one of the preceding claims, wherein the first component is part of or fixedly connected to the head and the second component is part of or fixedly connected to base, **characterized in that**
the first set position is defined by the driving position of the head, and
a first second set position is defined by the parking position of the head, and/or
a second second set position is defined by the knocked out position of the head.

## Patentansprüche

1. Drehrastsystem, angepasst für eine externe Rückblickvorrichtung eines Fahrzeugs mit einer an dem Fahrzeug zu befestigenden Basis und einem relativ zu der Basis drehbaren Kopf, wobei
das Drehrastsystem zwischen zwei Komponenten wirkt, die sich in Bezug aufeinander um eine Achse (15) drehen, um eine Drehung aus einer ersten vorgegebenen Position in mindestens eine zweite vorgegebene Position zu steuern, wobei jede dieser zwei Komponenten einen zylindrischen Abschnitt (10, 11) und ein widerstandsfähiges Mittel umfasst, das innerhalb eines zylindrischen Raums zwischen diesen zylindrischen Abschnitten (10, 11) angeordnet ist, um zwischen diesen zwei Komponenten zu wirken, die erste Komponente Teil des Kopfes oder mit diesem fest verbunden ist und die zweite Komponente Teil der Basis oder mit dieser fest verbunden ist und das Drehrastsystem einen in Form eines zylindrischen Abschnitts (10) bereitgestellten Gehäuserahmen und einen in Form eines zylindrischen Abschnitts (11) bereitgestellten Basisrahmen umfasst und
das Drehrastsystem ein Bajonett (14) umfasst, das sowohl entlang der Z-Achse, die parallel zu der Drehachse (15) liegt, als auch in Drehrichtung um die Drehachse (15) mit dem Gehäuserahmen fest verbunden ist,
**gekennzeichnet durch**
mindestens einen Rastring (12), der innerhalb des zylindrischen Raums zwischen den zylindrischen Abschnitten (10, 11) angeordnet ist, wobei der Rastring (12) zusammen mit der ersten Komponente relativ zu der zweiten Komponente bewegbar ist, wenn ein vorbestimmtes Drehmoment überwunden wird, um einen Rasteingriff zwischen dem Rastring (12) und der zweiten Komponente durch Verlagerung des widerstandsfähigen Mittels aufzuheben, wobei die erste Komponente zwischen einem schmalen Segment (10d) des zylindrischen Abschnitts (10) und einem breiten Segment (10e) des zylindrischen Abschnitts (10) mit einer Stufe (10a) ausgestattet ist, gegen welche durch die Wirkung des widerstandsfähigen Mittels auf den Rastring (12) eine Schulter (11b) der zweiten Komponente gepresst wird,
wobei der Rastring (12) über einen ersten Rasteingriff in die erste Komponente eingreift, wobei der erste Rasteingriff mindestens eine erste Raste (12a) des Rastrings (12) umfasst, die sich ringförmig nach innen erstreckt, um in eine entsprechende Vertiefung (10c) einzugreifen, die durch das schmale Segment (10d) des zylindrischen Abschnitts (10) der ersten Komponente bereitgestellt wird,
wobei der Rastring (12) in der mindestens einen zweiten vorgegebenen Position über einen zweiten Rasteingriff in die zweite Komponente eingreift, wobei der zweite Rasteingriff mindestens eine zweite Raste (12b) des Rastrings (12) umfasst, die sich ringförmig nach außen erstreckt, und
wobei die zweite Komponente mindestens einen Kanal (11c) bereitstellt, in dem sich die zweite Raste (12b) des Rastrings (12) bewegen kann.

2. Drehrastsystem nach Anspruch 1, **dadurch gekennzeichnet, dass** das schmale Segment (10d) der ersten Komponente in eine zylindrische Öffnung der zweiten Komponente passt,
der Rastring (12) innerhalb der zweiten Komponente und rund um das schmale Segment (10d) der ersten Komponente angeordnet ist und
das widerstandsfähige Mittel, vorzugsweise eine Spiralfeder (13) umfassend, sich zwischen dem Rastring (12) und einem Tragemittel erstreckt.

3. Drehrastsystem nach Anspruch 2, **dadurch gekennzeichnet, dass** das Bajonett (14) entlang der Z-Achse, die parallel zu der Drehachse (15) liegt, mittels der durch die Spiralfeder (13) bereitgestellten Druckbelastung mit dem Gehäuserahmen (10) fest verbunden ist.

4. Drehrastsystem nach einem der vorangehenden Ansprüche, **dadurch gekennzeichnet, dass**
das Tragemittel, insbesondere umfassend das Bajonett (14), sich entlang der ringförmigen Innenseite des schmalen Segments (10d) erstreckt, vorzugsweise den zylindrischen Abschnitt (10) der ersten Komponente umschließend und/oder an die Oberseite der Stufe (10a) der ersten Komponente angrenzend.

5. Drehrastsystem nach einem der vorangehenden Ansprüche, **dadurch gekennzeichnet, dass**
der Rastring (12) in der ersten vorgegebenen Position über einen dritten Rasteingriff in die zweite Komponente eingreift, wobei der dritte Rasteingriff vorzugsweise mindestens eine dritte Raste (11a) der zweiten Komponente innerhalb einer Vertiefung (12c) des Rastrings (12) umfasst, die sich parallel zu der Achse (15) erstreckt.

6. Drehrastsystem nach einem der vorangehenden Ansprüche, **dadurch gekennzeichnet, dass**
jeder Kanal (11c) zwischen zwei vierten Rasten (11d) der zweiten Komponente, die sich ringförmig nach innen erstrecken, definiert ist.

7. Drehrastsystem nach Anspruch 5 oder 6, **dadurch gekennzeichnet, dass**
die dritte Raste (11a) auf der Unterseite der Schulter (11b) der zweiten Komponente bereitgestellt ist und aus der Vertiefung (12c) des Rastrings (12) herausbewegt werden kann, indem die Feder (13) so verlagert wird, dass der Rastring (12) zusammen mit der ersten Komponente innerhalb des durch den Kanal (11c) der zweiten, festen Komponente definierten Winkelabschnitts gedreht werden kann.

8. Drehrastsystem nach einem der vorangehenden Ansprüche, **dadurch gekennzeichnet, dass**
die erste, zweite, dritte und/oder vierte Raste (12a, 12b, 11a, 11d) einen im Wesentlichen trapezförmigen Querschnitt aufweisen, vorzugsweise mit geglätteten Kanten.

9. Rückblickvorrichtung mit einer an einem Fahrzeug zu befestigenden Basis, einem relativ zu der Basis drehbaren Kopf und einem Drehrastsystem nach einem der vorangehenden Ansprüche, wobei die erste Komponente Teil des Kopfes oder mit diesem fest verbunden ist und die zweite Komponente Teil der Basis oder mit dieser fest verbunden ist, **dadurch gekennzeichnet, dass**
die erste vorgegebene Position durch die Fahrposition des Kopfes definiert ist und eine erste zweite vorgegebene Position durch die Parkposition des Kopfes definiert ist, und/oder
eine zweite zweite vorgegebene Position durch die ausgeschlagene Position des Kopfes definiert ist.

## Revendications

1. Système de détente de pivot adapté à un dispositif extérieur de vision arrière d'un véhicule avec une base à fixer au véhicule et une tête rotative par rapport à la base, dans lequel le système de détente de pivot agit entre deux éléments qui tournent l'un par rapport à l'autre autour d'un axe (15) pour commander la rotation depuis une première position de consigne vers au moins une seconde position de consigne, chacun desdits deux éléments comprenant une section cylindrique (10, 11) et un moyen élastique qui est agencé à l'intérieur d'un espace cylindrique entre lesdites sections cylindriques (10, 11) pour agir entre lesdits deux éléments, le premier élément fait partie de la tête ou est relié de manière fixe à celle-ci et le second élément fait partie de la base ou est relié de manière fixe à celle-ci, et le système de détente de pivot comprend un cadre de boîtier fourni sous la forme d'une section cylindrique (10) et un cadre de base fourni sous la forme d'une section cylindrique (11), et
le système de détente de pivot comprend une baïonnette (14) qui est verrouillée sur le cadre de boîtier à la fois le long de l'axe z qui est parallèle à l'axe de pivotement (15) et de manière rotative autour de l'axe de pivotement (15),
**caractérisé par**
au moins une bague de détente (12) qui est agencée à l'intérieur dudit espace cylindrique entre lesdites sections cylindriques (10, 11), la bague de détente (12) étant mobile conjointement avec le premier élément par rapport au second élément lorsqu'elle surmonte un couple prédéterminé pour rompre un engagement de détente entre la bague de détente (12) et le second élément en déviant le moyen élastique, dans lequel le premier élément est fourni avec un pas (10a) entre un segment étroit (10d) de la section cylindrique (10) et un segment large (10e) de la section cylindrique (10) contre lequel un épaulement (11b) du second élément est forcé par le moyen élastique agissant sur la bague de détente (12), la bague de détente (12) s'engage dans le premier élément par le biais d'un premier engagement de détente, le premier engagement de détente comprenant au moins une première détente (12a) de la bague de détente (12) s'étendant radialement vers l'intérieur pour s'engager dans un évidement respectif (10c) fourni par le segment étroit (10d) de la section cylindrique (10) du premier élément,
la bague de détente (12) s'engage dans le second élément par le biais d'un deuxième engagement de détente dans l'au moins une seconde position de consigne, le deuxième engagement de détente comprenant au moins une deuxième détente (12b) de la bague de détente (12) s'étendant radialement vers l'extérieur, et le second élément fournit au moins un canal (11c) à l'intérieur duquel la deuxième détente (12b) de la bague de détente (12) peut se déplacer.

2. Système de détente de pivot selon la revendication 1, **caractérisé en ce que** le segment étroit (10d) du premier élément s'ajuste dans une ouverture cylindrique du second élément,
la bague de détente (12) est située à l'intérieur du second élément et autour du segment étroit (10d) du premier élément, et
le moyen élastique, de préférence comprenant un ressort à enroulement (13), s'étend entre la bague de détente (12) et un moyen de support.

3. Système de détente de pivot selon la revendication 2, **caractérisé en ce que** la baïonnette (14) est verrouillée sur le cadre de boîtier (10) les deux le long de l'axe z qui est parallèle à l'axe de pivotement (15) en utilisant le chargement de compression fourni par le ressort à enroulement (13).

4. Système de détente de pivot selon une des revendications précédentes, **caractérisé en ce que** le moyen de support, en particulier comprenant la baïonnette (14), s'étend le long du côté radial vers l'intérieur du segment étroit (10d), embrassant de préférence la section cylindrique (10) du premier élément et/ou venant en butée contre le côté supérieur du pas (10a) du premier élément.

5. Système de détente de pivot selon une des revendications précédentes, **caractérisé en ce que** la bague de détente (12) s'engage dans le second élément par le biais d'un troisième engagement de détente dans la première position de consigne, le troisième engagement de détente comprenant de préférence au moins une troisième détente (11a) du second élément à l'intérieur d'un évidement (12c) de la bague de détente (12) s'étendant parallèlement à l'axe (15).

6. Système de détente de pivot selon une des revendications précédentes, **caractérisé en ce que** chaque canal (11c) est défini entre deux quatrièmes détentes (11d) du second élément s'étendant radialement vers l'intérieur.

7. Système de détente de pivot selon la revendication 5 ou 6, **caractérisé en ce que** la troisième détente (11a) est fournie au niveau du côté inférieur de l'épaulement (11b) du second élément et peut se déplacer en dehors de l'évidement (12c) de la bague de détente (12) en déviant le ressort (13) pour permettre à la bague de détente (12) de tourner conjointement avec le premier élément à l'intérieur de la section angulaire définie par le canal (11c) du second élément fixe.

8. Système de détente de pivot selon une des revendications précédentes, **caractérisé en ce que** la première, deuxième, troisième et/ou quatrième détente(s) (12a, 12b, 11a, 11d) présente(nt) une section en coupe transversale sensiblement trapézoïdale, de préférence avec des bords lisses.

9. Dispositif de vision arrière avec une base à fixer à un véhicule, une tête rotative par rapport à la base et un système de détente de pivot selon une quelconque des revendications précédentes, dans lequel le premier élément fait partie de la tête ou est relié de manière fixe à celle-ci et le second élément fait partie de la base ou est relié de manière fixe à celle-ci, **caractérisé en ce que**
la première position de consigne est définie par la position d'entraînement de la tête, et une première seconde position de consigne est définie par la position rentrée de la tête, et/ou
une seconde seconde position de consigne est définie par la position sortie de la tête.
